# FASCICULE DE BREVET EUROPEEN

(11) **EP 3 381 120 B1**
(45) Date de publication et mention de la délivrance du brevet: **15.03.2023**
(21) Numéro de dépôt: 16813080.5
(22) Date de dépôt: 24.11.2016
(51) Int. Cl.: H02P 5/74, H02P 27/08, B60L 15/08

(54) **SYSTÈME DE COMMANDE DE L'ALIMENTATION ÉLECTRIQUE D'UN VÉHICULE AUTOMOBILE ÉLECTRIQUE MUNI D'AU MOINS DEUX MACHINES ÉLECTRIQUES DE TRACTION**
SYSTEM ZUR STEUERUNG DER STROMVERSORGUNG EINES ELEKTRISCH BETRIEBENEN FAHRZEUGS MIT MINDESTENS ZWEI ELEKTRISCHEN ZUGMASCHINEN
SYSTEM FOR CONTROLLING THE ELECTRICAL SUPPLY OF AN ELECTRIC AUTOMOTIVE VEHICLE FURNISHED WITH AT LEAST TWO ELECTRIC TRACTION MACHINES

(30) Priorité: 25.11.2015 FR 1561352
(43) Date de publication de la demande: 03.10.2018
(73) Titulaire: Renault s.a.s, 92100 Boulogne Billancourt (FR)
(72) Inventeur: REYSS, Olivier, 92120 Montrouge (FR); STEWARD, Charles, 92370 Chaville (FR); VIGNIER, Benjamin, 78000 Versailles (FR); LETO, Nicolas, 92160 Antony (FR)
(74) Mandataire: Renault Group
(86) Numéro de dépôt international: PCT/FR2016/053079
(87) Numéro de publication internationale: WO 2017/089712

(56) Documents cités:
- EP-A2- 2 902 286
- US-A1- 2003 160 586

## Description

L'invention a pour domaine technique la commande de machines électriques de traction d'un véhicule automobile, et plus particulièrement, la commande de l'alimentation électrique de telles machines.

Un véhicule électrique utilise un onduleur pour générer une tension alternative d'alimentation d'une machine électrique de traction à partir de la tension continue générée par une batterie.

Les onduleurs de traction génèrent un certain nombre de perturbations lors de leur fonctionnement. Pour gérer les interactions entre les composants du réseau et du véhicule, il existe généralement une norme.

Lorsque deux onduleurs indépendants sont à proximité et connectés électriquement, des interactions très fortes apparaissent entre les deux onduleurs. La validation du véhicule peut alors être complexe.

Les deux onduleurs décrits ci-dessus présentent la même fréquence de découpage, et sont reliés à la même capacité continue DC. Chaque onduleur présente une impédance faible vu de la capacité continue DC. Les impédances entre les deux onduleurs étant volontairement très faibles, des interactions électromagnétiques vont nécessairement apparaître. Ces interactions prennent la forme de perturbations non répétables et non systématiques pour un même véhicule. Ainsi, un dysfonctionnement peut ne pas apparaître lors de la validation, et apparaître lors de l'homologation du véhicule.

Seuls les véhicules comportant deux onduleurs de traction indépendants commandés par des cartes de commande indépendantes et connectés à une même capacité sont confrontés à ce problème.

Or, il ne semble pas exister de tels véhicules dans l'état de la technique antérieure.

En effet, bien qu'il existe des documents décrivant des véhicules comprenant deux machines électriques à alimenter, aucun ne mentionne d'utiliser deux onduleurs distincts, et aucun ne divulgue les problèmes d'interférences décrits ci-dessus.

Ainsi, on peut trouver des documents liés à des véhicules munis d'un double onduleur (Toyota prius, Hyundai Sonata, GM Volt...). Toutefois, un tel double onduleur est intrinsèquement synchrone. Il ne peut donc y avoir d'interférences.

Le document FR 2 191 352 traite de la synchronisation de la porteuse de signal de commande d'onduleurs.

On rappelle que le fonctionnement d'un onduleur implique l'utilisation de deux fréquences :
- La fréquence de porteuse, qui est le sinus que l'on souhaite créer dans l'enroulement. En pratique, on approche juste un sinus par différentes techniques. Dans le brevet en question, il est approximé par des tensions en créneau, voire la somme de plusieurs de ces tensions légèrement déphasées. Cela diffère de l'état de l'art actuel, dans lequel on utilise un contrôle avec une modulation en largeur d'impulsion (PWM) pour obtenir un signal ayant une forme plus proche d'un sinus. Dans le cas de la commande d'une machine, on appelle cette première fréquence la fréquence électrique.
- La fréquence de découpage, qui est la fréquence de la modulation en largeur d'impulsion. Sur chaque période, la commande est à l'état haut pendant une durée donnée, et à l'état bas le reste du temps. On module le sinus en jouant sur le rapport cyclique et non la fréquence qui reste fixe.

Le document FR 2 191 352 concerne la synchronisation de la porteuse de plusieurs onduleurs afin d'alimenter une seule sortie avec plusieurs onduleurs, ce qui implique que les porteuses soient synchrones.

Ainsi, le document FR 2 191 352 ne pas fait mention de synchronisation des signaux de commande d'entrée.

Le document US2003160586 divulgue l'alimentation de plusieurs moteurs alimentés en continu, chacun avec un hacheur dont la modulation par largeur d'impulsion est calculée de manière individuelle. Ce document vise à permettre une commande séquentielle des moteurs au démarrage du véhicule.

Le document EP2902286 divulgue un procédé de synchronisation de la logique de contrôle de différents moteurs alimentés par des onduleurs, afin de mieux contrôler la traction ou l'usure d'un système de traction.

Il existe donc un besoin pour système de commande de l'alimentation électrique d'un véhicule électrique muni de deux moteurs électriques permettant de limiter les interférences des onduleurs de l'alimentation.

L'invention a pour objet un système de commande de l'alimentation électrique d'un véhicule automobile électrique muni d'au moins deux machines électriques de traction, alimentées chacune par un onduleur, les onduleurs étant connectés à une même capacité continue DC.

Le système comprend un premier moyen de commande d'un premier onduleur et un deuxième moyen de commande d'un deuxième onduleur,
une horloge interne apte à émettre un signal de synchronisation,
le premier moyen de commande étant apte à émettre un signal de découpage à destination du premier onduleur, modulé en largeur d'impulsion synchronisé sur le signal de synchronisation,
le deuxième moyen de commande étant apte à émettre un signal de découpage à destination du deuxième onduleur, modulé en largeur d'impulsion synchronisé sur le signal de synchronisation.

L'horloge interne peut être comprise dans le premier moyen de commande, le premier moyen de commande étant apte à émettre un signal de découpage à destination du premier onduleur, modulé en largeur d'impulsion synchronisé sur le signal de synchronisation de l'horloge interne, et étant apte à émettre le signal issu de l'horloge interne en tant que signal de synchronisation à destination du deuxième moyen de commande.

Un tel système de commande permet de limiter les interférences entre les onduleurs et de préserver le réseau de tension continu.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un premier mode de réalisation d'un système de commande selon l'invention, et
- la figure 2 illustre les principaux éléments d'un deuxième mode de réalisation du système de commande selon l'invention.

Comme cela a été décrit en introduction, les interactions entre deux onduleurs connectés à la même capacité continue DC sont très fortes. La signature de compatibilité électronique CEM de l'ensemble dépend notamment du déphasage entre les fréquences de découpage.

Si les deux onduleurs sont à la même fréquence, il se peut qu'ils soient en phase à un instant, et en opposition de phase quelques secondes plus tard. Par exemple, si un onduleur fonctionne à une fréquence de 10000,1 Hz et l'autre onduleur à une fréquence de 10000 Hz, le système passe d'un fonctionnement en phase à un fonctionnement déphasé en quelques secondes. Un tel glissement est inévitable, et peut générer des phénomènes périodiques, de période très grande : plusieurs secondes. Or certains tests, ou certaines mesures peuvent être plus rapides et de ne pas permettre d'observer ces phénomènes lors de la validation. Cela peut avoir un effet lors de la conception et du fonctionnement du véhicule.

Par exemple, on choisit la valeur de la capacité DC pour supporter le niveau maximum de courant d'ondulation (« ripple current » en langue anglaise) spécifié lors de la conception. Lorsque les onduleurs ne sont pas synchronisés, il faut étudier tous les cas possibles, et dimensionner la capacité sur le pire cas. Lorsque les onduleurs sont synchrones, la situation à considérer est unique. Synchroniser les onduleurs permet ainsi de simplifier la mise au point.

Un autre exemple concerne les perturbations parasites entre onduleurs.

En l'absence de synchronisation, des perturbations parasites peuvent apparaître entre les deux onduleurs, sur des points de fonctionnement aléatoires. Lorsque des organes de puissance tels que des onduleurs, fonctionnent en découpage à proximité l'un de l'autre, la commutation de l'un peut perturber la commutation de l'autre.

Toutefois, la perturbation est aléatoire tant en amplitude qu'en fréquence, de sorte qu'il est compliqué de comprendre cette perturbation, et surtout de la répéter.

Avec des onduleurs synchrones, les perturbations sont toujours présentes mais se produisent sur des points de fonctionnement précis et répétables pour chacun des onduleurs. Ces notions de répétabilité et de représentativité des validations sont très importantes lors d'un développement, en vue de l'homologation.

Ceci se traduit par un gain économique de validation et une mise au point simplifiée.

Les onduleurs 2,4 d'un véhicule électrique, connectés chacun à une machine électrique de traction 3,5, et à une même capacité continue 6 peuvent être commandés par le système de commande 1 suivant.

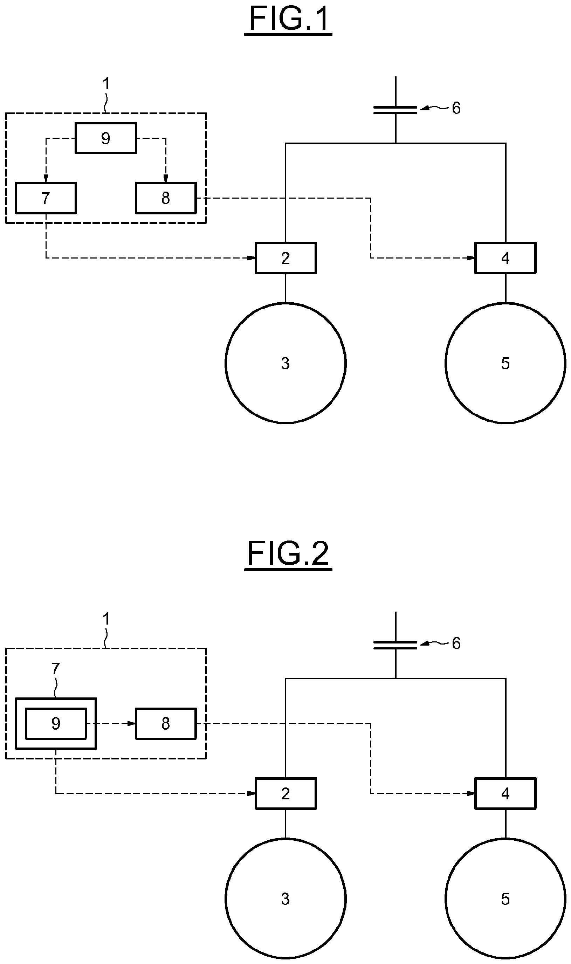

Selon un premier mode de réalisation illustré par la figure 1, le système de commande 1 comprend un premier moyen de commande 7 du premier onduleur 2, un deuxième moyen de commande 8 du deuxième onduleur 4 et une horloge interne 9 apte à émettre un signal de synchronisation.

Le premier moyen de commande 7 émet un signal de découpage à destination du premier onduleur 2, modulé en largeur d'impulsion synchronisé sur le signal de synchronisation de l'horloge interne 9.

Le deuxième moyen de commande 8 émet un signal de découpage à destination du deuxième onduleur 4, modulé en largeur d'impulsion synchronisé sur le signal de synchronisation de l'horloge interne 9.

Selon un autre mode de réalisation illustré par la figure 2, le premier moyen de commande 7 comprend l'horloge interne 9 apte à émettre un signal de synchronisation et émet un signal de découpage à destination du premier onduleur 2, modulé en largeur d'impulsion synchronisé sur le signal de synchronisation de l'horloge interne 9.

Le premier moyen de commande 7 est également apte à émettre le signal issu de l'horloge interne 9 en tant que signal de synchronisation à destination du deuxième moyen de commande 8.

Le deuxième moyen de commande 8 émet un signal de découpage à destination du deuxième onduleur 4, modulé en largeur d'impulsion synchronisé sur le signal de synchronisation reçu du premier moyen de commande 7.

## Revendications

1. Système de commande de l'alimentation électrique d'un véhicule automobile électrique muni d'au moins deux machines électriques de traction (3,5), alimentées chacune par un onduleur (2,4), les onduleurs (2,4) étant connectés à une même capacité continue (6), et fonctionnant en découpage à la même fréquence de découpage à proximité l'un de l'autre, de sorte que la commutation de l'un peut perturber la commutation de l'autre,
**caractérisé par le fait qu'**il comprend un premier moyen de commande (7) d'un premier onduleur (2) et un deuxième moyen de commande (8) d'un deuxième onduleur (4),
une horloge interne (9) apte à émettre un signal de synchronisation,
le premier moyen de commande (7) étant apte à émettre un signal de découpage à destination du premier onduleur (2), modulé en largeur d'impulsion synchronisé sur le signal de synchronisation,
le deuxième moyen de commande (8) étant apte à émettre un signal de découpage à destination du deuxième onduleur (4), modulé en largeur d'impulsion synchronisé sur le signal de synchronisation.

2. Système selon la revendication 1, dans lequel l'horloge interne (9) est comprise dans le premier moyen de commande (7), le premier moyen de commande (7) étant apte à émettre un signal de découpage à destination du premier onduleur (2), modulé en largeur d'impulsion synchronisé sur le signal de synchronisation de l'horloge interne (9), et étant apte à émettre le signal issu de l'horloge interne (9) en tant que signal de synchronisation à destination du deuxième moyen de commande (8).

## Patentansprüche

1. System zur Steuerung der Stromversorgung eines elektrisch betriebenen Fahrzeugs mit mindestens zwei elektrischen Zugmaschinen (3, 5), die jeweils durch einen Wechselrichter (2, 4) versorgt werden, wobei die Wechselrichter (2, 4) mit ein und derselben Gleichspannungskapazität (6) verbunden sind und mit Schalttaktung im selben Schalttakt nahe zueinander arbeiten, so dass das Schalten des einen das Schalten des anderen stören kann,
**dadurch gekennzeichnet, dass** es ein erstes Steuerungsmittel (7) für einen ersten Wechselrichter (2) und ein zweites Steuerungsmittel (8) für einen zweiten Wechselrichter (4),
einen internen Taktgeber (9), der geeignet ist, ein Synchronisationssignal auszugeben, umfasst,
wobei das erste Steuerungsmittel (7) geeignet ist, ein Schalttaktsignal an den ersten Wechselrichter (2) auszugeben, dessen Impulsbreite synchronisiert mit dem Synchronisationssignal moduliert wird,
wobei das zweite Steuerungsmittel (8) geeignet ist, ein Schalttaktsignal an den zweiten Wechselrichter (4) auszugeben, dessen Impulsbreite synchronisiert mit dem Synchronisationssignal moduliert wird.

2. System nach Anspruch 1, wobei der interne Taktgeber (9) im ersten Steuerungsmittel (7) umfasst ist, wobei das erste Steuerungsmittel (7) geeignet ist, ein Schalttaktsignal an den ersten Wechselrichter (2) auszugeben, dessen Impulsbreite synchronisiert mit dem Synchronisationssignal des internen Taktgebers (9) moduliert wird, und geeignet ist, das Signal vom internen Taktgeber (9) als Synchronisationssignal an das zweite Steuerungsmittel (8) auszugeben.

## Claims

1. System for controlling the electrical supply of an electric motor vehicle equipped with at least two electric traction machines (3, 5), each supplied by an inverter (2, 4), the inverters (2, 4) being connected to one and the same DC capacitor (6), and switching at the same switching frequency close to one another, such that the switching of one may interfere with the switching of the other,
**characterized by** the fact that it comprises a first control means (7) for controlling a first inverter (2) and a second control means (8) for controlling a second inverter (4),
an internal clock (9) able to transmit a synchronization signal,
the first control means (7) being able to transmit a switching signal to the first inverter (2), which switching signal is pulse-width-modulated and synchronized to the synchronization signal,
the second control means (8) being able to transmit a switching signal to the second inverter (4), which switching signal is pulse-width-modulated and synchronized to the synchronization signal.

2. System according to Claim 1, wherein the internal clock (9) is comprised in the first control means (7), the first control means (7) being able to transmit a switching signal to the first inverter (2), which switching signal is pulse-width-modulated and synchronized to the synchronization signal of the internal clock (9), and being able to transmit the signal originating from the internal clock (9) as synchronization signal to the second control means (8).
